Europäisches Patentamt

**European Patent Office**

**Office européen des brevets**

(11) Publication number: **0 251 704**
**A2**

# (12) EUROPEAN PATENT APPLICATION

(21) Application number: **87305661.8**

(22) Date of filing: **25.06.87**

(51) Int. Cl.⁴: **H02G 1/12**

(30) Priority: **25.06.86 ES 295257**

(43) Date of publication of application:
**07.01.88 Bulletin 88/01**

(84) Designated Contracting States:
**BE DE FR GB IT LU NL**

(71) Applicant: **Diaz de Guerenu Aguirrebeitia, Pablo**
**Piso Martutene s/n Casa Iru-Lagunak**
**E-20014 San Sebastian(ES)**

(72) Inventor: **Diaz de Guerenu Aguirrebeitia, Pablo**
**Piso Martutene s/n Casa Iru-Lagunak**
**E-20014 San Sebastian(ES)**

(74) Representative: **Maguire, Peter Albert et al**
**P.A. Maguire & Co. 12, The Broadway**
**St. Ives, Cambridgeshire PE17 4BN(GB)**

(54) **Apparatus for stripping electrical cables and the like.**

(57) Apparatus for stripping insulation from electrical cables and the like, characterised in that it consists of a main body (1) having some cutters (5, 6) placed in perpendicular planes, projecting into some recesses (4) formed by arches of different radii, in relation to which some supports (7) are provided on an arm (2) articulated to the said main body, to enable by means of the conjunction of both, longitudinal and transversal stripping of the cables to take place, and characterised in that the said articulated arm, in its end close to the articulation (3), defines a zone of fitting for other cutters (8) which, corresponding with an orifice (9) preferably circular in configuration, enable the final stripping of the internal conductors of the cable to take place; whereas the conjunction between these cutters and a support of the said main body provided with a seating surface enables the preparation of the said internal conductors to take place.

Fig 1

## APPARATUS FOR STRIPPING ELECTRICAL CABLES AND THE LIKE

The invention relates to apparatus for stripping the insulation from electric cables and the like.

One of the tasks carried out very frequently by electricians and professionals engaged in the installation, manufacture or repair of electrical components is stripping insulation from cables so that, once the insulation has been removed, the metal inner can be connected to an electrical apparatus or connector.

For this manual task the tool most used is an electricians' conventional wire cutters which, when used skilfully, can strip small diameter cables with relative efficiency depending on the skill and experience of the person carrying out the operation, although almost always the odd strand of wire is involuntarily cut, as a consequence of which the effective section of the wire is reduced, impeding the passage of current or electrical signal.

However, when it comes to stripping braided, armoured or coaxial cables of a certain thickness, conventional wire cutters are difficult to use, particularly on the outer sheath, and very often internal wires are cut in an almost imperceptible way, leading to shortcircuiting and similar problems later.

To solve the abovementioned problems and obtain a perfect cut for all types of cables, the subject of the present invention was developed, being an improved apparatus for stripping insulation from electrical cables and similar, which consists of a main body and an arm articulated connected to it, both made of synthetic material, and which comprise a series of different matching cutouts with cutters located in them in such a way that when the cable is introduced into the said cutouts and the tool is rotated, a circumferential and/or longitudinal cutting of the insulation takes place, whereby the required depth is removed, being just enough to separate the protective sheath without damaging the conductive metal inner.

In order that the proposed tool can operate efficiently over a wide range of cable diameters, the main body has cutouts of different diameters and the articulated arm can be moved to intermediate positions more or less close to the body, thus defining a wide range of diameters, the said intermediate positions remaining fixed thanks to a serration of the main body, on which a flexible appendage to the articulated arm is engaged, this serration having an indicator scale showing the user the size of the appropriate diameter to be cut in the said position.

As was mentioned previously, in addition to the circumferentially cutting blades, which are useful for conventional stripping, the subject of the invention has, on its main body, a cutter arranged perpendicularly to the rest which enables longitudinal slitting of cables as required with surprising simplicity and efficiency, a characteristic which enormously simplifies the stripping of armoured, coaxial and similar cables with a protective external sheath.

Between the apertures of consecutive cutters a shape is formed between the body and the arm which enables any type of cable to be gripped firmly as if between jaws, so that, once the sheath has been cut, it is separated from its inner, the said jaws being stepped, making it very useful for a wide range of diameters.

In addition to the main body, the articulated arm also has some cutters which are situated close to the hinge point to enable small diameter cables to be stripped in the said position or the said cables to be cut. The cutters can be single or double enabling in the latter case both the exterior and the interior of cables such as for example those used as antennae and for the transmission of signals to be stripped simultaneously, having been placed for different depths cut.

The cutters, according to a preferred version, are fixed to the body or arm by means of screws in such a way that they are easily removable. Moreover, there are other screws which enable their position to be changed such that greater or lesser depths of cut can be carried out or which enable their position to be changed in order to produce a uniform offcut.

As can be seen from everything mentioned up to this point, the subject of the invention has a versatility and simplicity of operation which distinguish it from that which is known in this field to date, which together with other advantages such as the possibility of adjustment, a clean cut without affecting the conductive element etc, make the apparatus new and original.

Figure 1 is a perspective view of the apparatus of the invention in its open position.

Figure 2 is a side view of the apparatus, showing in outline the theoretical possible positions of the cables to be stripped.

Figure 3 is a front view of the apparatus for stripping cables, showing its hinge.

Figure 4 is a side view of the apparatus in which the two cutters (8) located on the arm (2) can be seen.

Figure 5 is a plan view of the apparatus showing the adjusting screws (17) for the cutters.

Explanatory details

1 - Body
2 - Arm
3 - Hinge
4 - Arches
5 - Transverse cutters
6 - Longitudinal cutter
7 - Supports
8 - Cutter
9 - Orifice
10 - Cradle
11 - Clamp
12 - Retaining hook
13 - Serration
14 - Indicating scale
15 - Projection
16 - Recess
17 - Adjusting screws
18 - Fixing screws

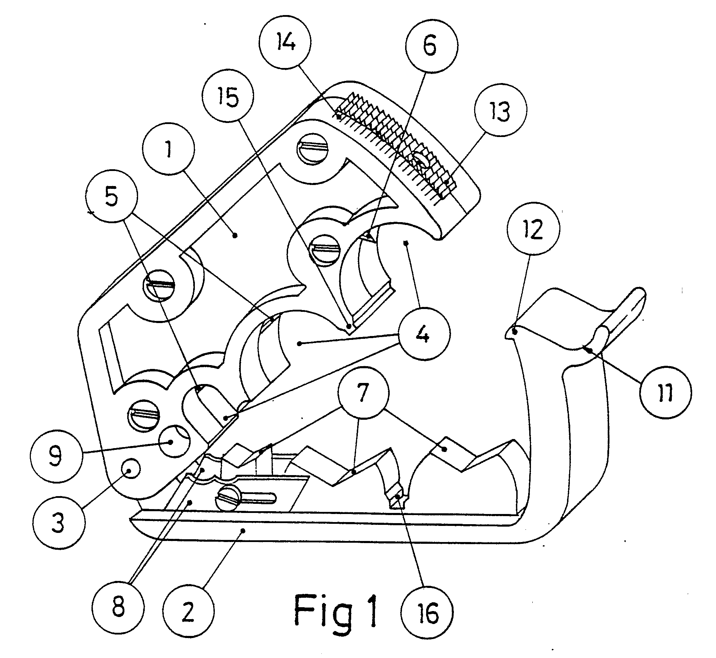

The subject of this invention is an apparatus for stripping electrical and similar cables which consists, as can be seen from Figure 1, of a body (1) formed by the coupling of two corresponding parts of synthetic plastics material which at one end and by means of a hinge (3) formed by a part like a bolt is joined to an arm (2) forming a unit like a mandible which can be moved by hand, having been designed in such a way that at least the arm (2) forms an antomical configuration which helps it to be gripped, to define some resting places for the user's fingers.

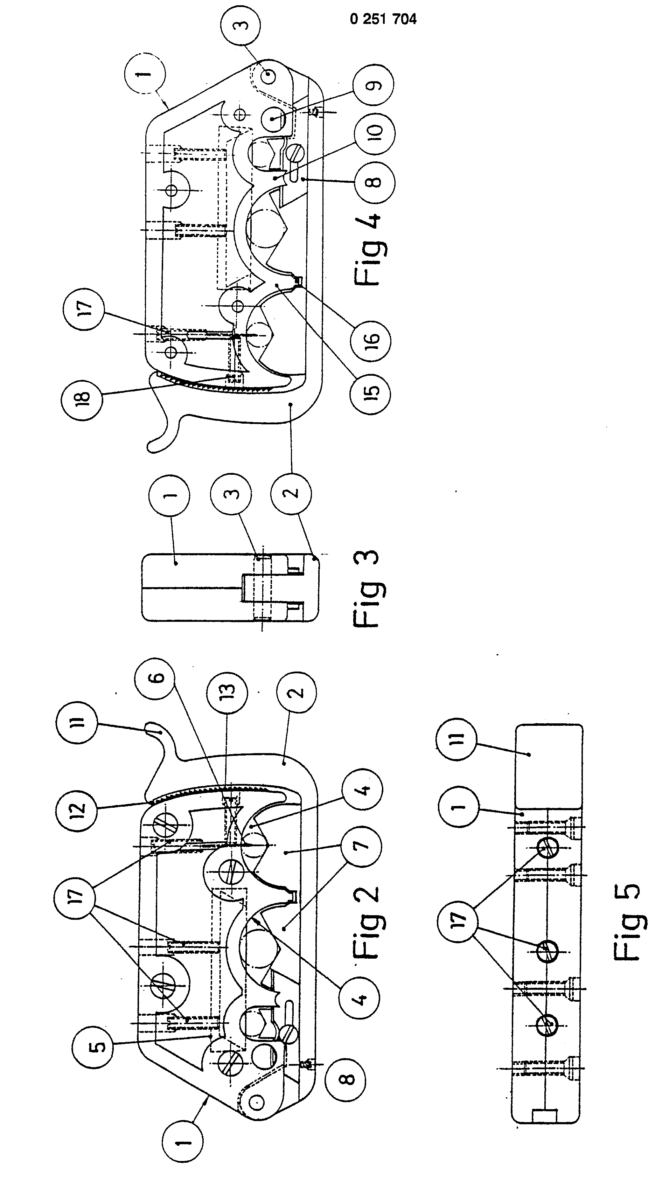

The body (1), in its interior, has a series of arches (4) of different diameters, in which cutters (5 and 6) are located centrally projecting slightly and perpendicularly inside them. Moreover, positionally corresponding to the said arches there are on the arm (2) some supports (7), made in one piece of the same synthetic material. All this is arranged in such a way that, as can be seen from Figure 2, if a cable is placed between the arch (4) and the support (7) corresponding to its diameter, by rotating the apparatus round the cable, a circumferential cut can be made of its sheath by means of the cutter (5) which is transverse to the cable; or an axial cut of the said insulating sheath can be made by means of the longitudinal cutter (6) when the apparatus is moved along the cable.

Adapting the cut to the diameter of the cable and to the thickness of the insulation can be carried out on the one hand by bringing the body (1) and the arm (2) closer together to a greater or lesser extent in a stepped and precise way thanks to the presence of a retaining hook (12) on an appendage to the arm (2), see Figure 2, this hook being fixed flexibly above a serration (13) of the body (1), in which an indicating scale (14) is present, showing with precision the ideal depth of cut for each type of cable. Removal of the hook (12) is effected by pressing on a trigger (1) anatomically adapted to the user's hand in such a way the whole unit can be handled quickly.

On the other hand, this adaptation can be adjusted selectively by the user, operating on the cutters (5 and 6), as can be seen in Figures 2 and 4, the cutters (5 and 6) having adjusting screws (17) resting on their internal edge and by means of which the depth of cut can be adjusted with precision in such a way that in no case is any damage caused to the cable or the internal conductor. Moreover, see Figure 4, there is a perpendicular fixing screw (18) for the cutter (6).

On the arm (2) there is also at least one cutter (8), see Figure 4, with a mounting which is movable longitudinally to obtain a uniform offcut, which enables both stripping and cutting of small diameter cables to take place. This function is effected by the conjunction of the said cutter (8) with an orifice (9) strategically placed for cutting only the insulating sheath and of a cradle (10) which gives support for the total section of the cable. It should be pointed out that the cutter (8) can be doubled and placed on both sides of the arm (2) and at different heights of cut, so that when the apparatus is rotated different sections of cables can be cut in one single operation. This is suitable for coaxial type cables such as for example cables used as antennae and apparatus for the transmission of signals.

Between two consecutive arches (4) the body (1) forms a projection (15) stepped and joined positionally with a recess (16), see Figure 4, in such a way that between both elements jaws are formed which are capable of firmly gripping the sheath of the cable which has already been cut, whatever its diameter, and to enable it to be removed in a simple and effective way by means of twisting.

From one of the smaller sides of the apparatus a curved cutter projects outwards like a hook, enabling cuts to be carried out along the cables in situations such as for example when these cables are already installed and against a wall.

**Claims**

1. Apparatus for stripping insulation from electrical cables and the like, characterised in that it consists of a main body (1) having some cutters (5, 6) placed in perpendicular planes, projecting into some recesses (4) formed by arches of different radii, in relation to which some supports (7) are provided on an arm (2) articulated to the said main body, to enable by means of the conjunction of both, longitudinal and transversal stripping of the cables to take place, and characterised in that the said articulated arm, in its end close to the articulation (3), defines a zone of fitting for other cutters (8) which, corresponding with an orifice (9) preferably circular in configuration, enable the final stripping of the internal conductors of the cable to take place; whereas the conjunction between these cutters and a support of the said main body provided with a seating surface enables the preparation of the said internal conductors to take place.

2. Apparatus for stripping electrical cables and the like according to claim 1, characterised in that the cutters (8) located on the articulated arm (2) have a mounting which allows adjustment of their longitudinal position, for progressive use of the said cutters, before they are worn out or damaged.

3. Apparatus for stripping electrical cables and the like according to claim 1 or claim 2, characterised in that the articulated arm (2) defines, in its free end, a support (11) for the finger or fingers of the user in order to facilitate the action on the said arm tending to bend and free it from a retaining hook (12) fitted between this end of the arm and serrations (13) on the main body.

4. Apparatus for stripping electrical cables and the like according to any preceding claim, characterised in that the apparatus, preferably in the area of the serrations (13), bears recordings and or indications (14) enabling the user to define and select the correct position of connection of the said articulated arm as a function of the diameter of the cable to be stripped.

5. Apparatus for stripping electrical cables and the like according to any preceding claim, characterised in that it is possible to take advantage of at least one of the recesses defined between the conformations which for the support of the cables defines the articulated arm and the respective projection of the main body which enters it, to define jaws which enable the cable to be operated on, thus facilitating the removal of the cable sheath once it is cut.

6. Apparatus for stripping electrical cables and the like according to any preceding claim, characterised in that the main body is formed of synthetic plastics material in two halves, coupled together to carry the respective cutters (5, 6), in relation to which are fitted some positional regulating screws, with the proviso that the said main body for the more usual sizes of cables can be defined by a single-piece body with built-in cutters.

7. Apparatus for stripping electrical cables and the like according to any preceding claim, characterised in that, at least, the articulated arm in its area destined for the support of the user's fingers defines an anatomical conformation facilitating the gripping of the unit.

Fig 1

Fig 4

Fig 3

Fig 2

Fig 5